# EUROPÄISCHE PATENTSCHRIFT

(11) **EP 0 801 890 B1**
(45) Veröffentlichungstag und Bekanntmachung des Hinweises auf die Patenterteilung: **20.01.1999**
(21) Anmeldenummer: 96106129.8
(22) Anmeldetag: 18.04.1996
(51) Int. Cl.: A01G 9/02

(54) **Blumenkastenvorrichtung**
Flower box device
Dispositif de bac à fleurs

(43) Veröffentlichungstag der Anmeldung: 22.10.1997
(73) Patentinhaber: Müller, Angela, 88477 Schwendi (DE)
(72) Erfinder: Müller, Angela, 88477 Schwendi (DE)
(74) Vertreter: Kiessling, Christian

(56) Entgegenhaltungen:
- EP-A- 0 344 993
- CH-A- 164 465
- FR-A- 2 445 272

## Beschreibung

Die Erfindung betrifft eine Blumenkastenvorrichtung für die Aufnahme von Blumen und/oder Pflanzen, wobei die Vorrichtung zusammengesetzt ist aus einem Basiskasten und einer Mehrzahl von Blumenkastenelementen, in die jeweils eine Mehrzahl von Blumen und/oder Pflanzen einbringbar sind, und die in den Basiskasten einsetzbar sind.

Blumenkästen der eingangs genannten Art werden dazu verwendet, Blumen z.B. an Fensterbrettern oder auf Balkonen in aufgereihter Weise aufzustellen. Da bei derartigen Blumenkästen das zur Aufnahme der Wurzeln der Blumen oder Pflanzen vorhandene Erdreich für alle in dem Blumenkasten aufgenommenen Blumen oder Pflanzen nur gleichmäßig bewässert werden kann, weisen derartige Blumenkästen den Nachteil auf, daß Blumen bzw. Pflanzen mit unterschiedlichen Wasserbedürfnissen nicht zusammen in einem Blumenkasten miteinander kombiniert werden können.

Eine Blumenkastenvorrichtung der eingangs genaanten Art ist aus EP-A 344 993 bekannt. Bei dieser Blumenkastenvorrichtung sind innere Kästen in einen äußeren Kasten eingesetzt, wobei der äußere Kasten Einrichtungen zum Plazieren der inneren Kästen aufweist. Dabei sind sowohl zwischen den äußeren Kästen untereinander als auch zwischen den einzelnen inneren Kästen Zwischenräume gebildet, die sich bei einem Begießen der in den Kästen aufbewahrten Blumen leicht mit Wasser füllen, das mit der Zeit eine übelriechende, brachige Qualität annimmt, da dieses Wasser schlecht belüftet ist.

Aufgabe der Erfindung ist es, eine Blumenkastenvorrichtung zu schaffen, bei der auch Blumen bzw. Pflanzen mit unterschiedlichen Bewässerungsbedürfnissen in einen Blumenkasten aufgenommen werden können, ohne daß dabei Brachwasser entsteht.

Diese Aufgabe wird erfindungsgemäße dadurch gelöst, daß die Blumenkastenelemente quaderförmig ausgestaltet sind und unterschiedliche Breiten aufweisen die so gewählt sind, daß die Summe ihrer Breiten annähernd gleich der Breite des Basiskastens ist.

Durch das Bereitstellen einzelner Blumenkastenelemente, in die jeweils eine einzelne Blume oder Pflanze oder eine einzelne Blumenart oder Pflanzenart eingesetzt ist, wird erreicht, daß einzelne Blumen bzw. Pflanzen mit einem eigenen, jeweils an sie optimal angepaßten Wurzelbiotop versehen werden können. Es ist somit möglich, einzelne Pflanzen in einem derartigen Erdreich zu plazieren und derart zu bewässern, düngen und gegebenenfalls mit Schädlingsbekämpfungsmitteln zu behandeln, daß jede in einen Basiskasten eingebettete Pflanze oder Pflanzenart je nach ihren spezifischen Bedürfnissen optimal versorgt ist.

Es können somit auch solche Pflanzen miteinander in einem Blumenkasten kombiniert werden, deren unterschiedliche Pflegebedürfnisse ein Einbringen in ein gemeinsames Erdreich ausschließen. Darüber hinaus weist die erfindungsgemäße Blumenkastenvorrichtung den Vorteil auf, daß kranke, beschädigte, von Schädlingen befallene oder abgestorbene Pflanzen einzeln und ohne Schädigung oder Beeinträchtigung der übrigen im Blumenkasten angeordneten Pflanzen entfernt werden können und durch jeweils gesunde neue Pflanzen ausgetauscht werden können. Auf diese Weise können auch ein- und mehrjährige Pflanzen in einem Blumenkasten kombiniert werden.

Ein weiterer wichtiger Vorteil der erfindungsgemäßen Blumenkastenvorrichtung liegt darin, daß im Stand der Technik bekannte Wasserspeichermatten auf die speziellen Abmessungen eines Blumenkastenelementes zugeschnitten werden können, um somit das Wässerungsbedürfnis einzelner Pflanzen gezielt regeln zu können. Es können dabei auch verschiedenartige Erdreiche, wie sandige, lehmige, grobkörnige, mit Steinen durchsetzte, lockere oder feste Erdmischungen in die verschiedenen Blumenkastenelemente eingebracht werden, um so wiederum gezielt den jeweiligen Bedürfnissen und Präferenzen der einzelnen, in den unterschiedlichen Blumenkastenelementen eingesetzten Pflanzen oder Blumen Rechnung zu tragen.

Ein weiterer wichtiger Vorteil der erfindungsgemäßen Blumenkastenvorrichtung liegt darin, daß mehrjährige Pflanzen, wie z.B. Geranien oder Fuchsien zum Zweck der Winterlagerung zusammen mit ihren entsprechenden Blumenkastenelementen aus den Basiskästen der erfindungsgemäßen Blumenkastenvorrichtung entfernt werden können, wobei diese Pflanzen zur Überwinterung dann ohne einen sonst notwendigen Vorgang des Umtopfens gelagert werden können. Dadurch wird wiederum erreicht, daß an den Wurzeln derartiger Pflanzen keine Beschädigungen auftreten, wie sie ansonsten mit einem Umtopfungsvorgang verbunden sind.

Das Konzept der erfindungsgemäßen Blumenkastenvorrichtung ermöglicht somit, daß die in den Blumenkästen aufzustellenden Blumen der jeweiligen Jahreszeit angepaßt werden können, ohne den Blumenkasten selbst aus seiner jeweiligen Verankerung lösen zu müssen. Die erfindungsgemäße Blumenkastenvorrichtung ermöglicht damit ein jeweils neues Bestücken bzw. Austauschen einzelner Blumenkastenelemente, die jeweils immer saisonal blühende Pflanzen oder Blumen enthalten, wobei jahreszeitlich nicht blühende oder unattraktiv aussehende Pflanzen oder Blumen durch jeweilige blühende bzw. attraktiv aussehende Pflanzen oder Blumen ersetzt werden. So können beispielsweise die folgenden Blumen mit einer immergrünen, ganzjährigen Bepflanzung aus z.B. Koniferen usw. kombiniert werden:
- Frühling: Krokus, Tulpen, usw.
- Sommer : Impatiens , Lobelien, usw.
- Herbst : Astern, Dahlien, usw.
- Winter : Eriken, Azaleen, usw.

Die Blumenkastenelemente sind gemäß bevorzugter Ausführungsformen aus recyclebaren Kunststoffen hergestellt, die pflegeleicht sind und deren Gewicht leichter als Keramik, Terracotta, Eternit, usw. ist. Die Blumenkastenelemente können jeweils auch als einzelne Blumentöpfe verwendet werden und sollen auf dem Markt einzeln erhältlich bzw. nachkaufbar sein. Sie weisen möglicherweise unterschiedliche, jedoch stets genormte Breiten auf, bei denen sichergestellt ist, daß die Summe der Breiten mehrerer seitlich aneinander gereihter Blumenkastenelemente immer etwa gleich der Breite eines Basiskastens ist bzw. um soviel kleiner als die Breite eines Basiskastens ist, daß die aneinandergereihten Blumenkastenelemente in einen Basiskasten eingestzt werden können. Auf diese Weise sind individuelle Kombinationsmöglichkeiten bzw. Gestaltungsmöglichkeiten der Blumenkastenelemente innerhalb eines Basiskastens ermöglicht.

Mit der erfindungsgemäßen Blumenkastenvorrichtung wird es desweiteren ermöglicht, "Ersatzpflanzen" in separaten Blumenkastenelementen aufzuziehen. Die erfindungsgemäße Blumenkastenvorrichtung kann gemäß einer Vielzahl von Formen, wie etwa oval oder an den Seiten abgerundet ausgeformt sein, wobei es lediglich wesentlich ist, daß die Blumenkastenelemente schlüssig aneinander gereiht werden können und in dieser seitlichen Aneinanderreihung formschlüssig in den Basiskasten einsetzbar sind. Gemäß einer bevorzugten Ausführungsform der erfindungsgemäßen Blumenkastenvorrichtung sind die Blumenkastenelemente jedoch quaderförmig nach oben offen ausgestaltet, da dies die einfachste und kostengünstigste Ausführungsform ist.

Die Blumekastenelemente sind gemäß bevorzugter Ausführungsformen zur Grundfläche hin sich verjüngend ausgebildet, damit sie zur Lagerung ineinander gestapelt werden können. Die Diagonale der Grundfläche eines Blumenklastenelementes weist dabei beispielsweise eine im Bereich von 1 % bis 20 % geringere Länge als die Diagonale der im oberen Bereich von den Wänden des Blumenkastenelementes gebildeten, zur Grundfläche parallenen Fläche auf.

Gemäß einer anderen bevorzugten Ausführungsform der erfindungsgemäßen Blumenkastenvorrichtung weisen die einzelnen Blumenkastenelemente jeweils unterschiedliche Breiten auf, um miteinander zu kombinierenden Pflanzen mit unterschiedlichem Platzbedarf den nötigen Raum zu bieten, wobei die Breiten der Blumenkastenelemente so gewählt sind, daß der Betrag der Summe ihrer Breiten annähernd gleich der Breite des Basiskastens ist. Sowohl bezüglich des Platzbedarfes einzelner Blumen als auch mit Hinsicht auf das Zusammenfügen der Blumenkastenelemente sind dabei solche Abessungen zweckmäßig, die sich aus einem Vielfachen von 5 cm, bzw. geringfügig weniger als 5 cm, ergeben, so daß die Basiskästen bevorzugt eine Breite aufweisen, die ein Vielfaches von 5 cm oder 10 cm bzw. geringfügig geringer ist. So können die Blumenkastenelemente beispielsweise eine Breite von knapp 5 cm, knapp 10 cm, knapp 15 cm, u.s.w. aufweisen.

Die Basiskästen der Blumenkastenvorrichtung sind zum Erzeugen eines einheitlichen Gesamtbildes bevorzugt aus den jeweils gleichen Materialien wie die Blumenkastenelemente hergestellt. Sie können jedoch prinzipiell auch aus jeweils anderen Materialien wie die Blumenkastenelemente hergestellt sein. Als Basiskästen können auch auf dem Markt schon eingeführte und frei erhältliche normale Blumenkästen verwendet werden. In diesem Fall müssen die Blumenkastenelemente in ihren Abmessungen so bemessen sein, daß eine Mehrzahl von ihnen schlüssig in einen derartigen Blumenkasten eingesetzt werden kann.

Gemäß bevorzugter Ausgestaltungen sind die Blumenkastenelemente der erfindungsgemäßen Blumenkastenvorrichtung an mindestens einer ihrer Seiten oder Ecken mit Laschen aus einem festen oder elastischen Material zu versehen, die ein Erfassen von Hand der Blumenkastenelemente erleichtern, um sie aus einem Basiskasten herauszuheben. Zu diesem Zweck ist es besonders wirkungsvoll, mindestens zwei durch jeweils eine Längs- und eine Querseite gebildete jeweils obere Eckbereiche eines Blumenkastenelementes durch eine Strebe oder eine Zunge miteinander zu verbinden. Auf diese Weise bleibt die äußere optische Erscheinung eines Blumenkastenelementes einfach und unauffällig, und seine mechanische Stabilität wird darüberhinaus erhöht.

Gemäß einer anderen bevorzugten Ausgestaltung sind die Blumenkastenelemente an einer ihrer Querseiten mit einer Kerbe versehen, wobei bei einem in einen Basisikasten eingesetzten Zustand einer Mehrzahl von Blumenkastenelementen die Kerbe der Quersteite eines ersten Blumenkastenelementes jeweils an der gegenüberliegenden, nicht mit einer Kerbe versehenen Querseite des benachbarten Blumenkastenelementes zu liegen kommt. Dadurch wird eine andere sehr einfache und gleichwohl effektive Möglichkeit zum Herausnehmen einzelner Blumenkastenelemente gegeben.

Die erfindungsgemäße Blumenkastenvorrichtung wird im folgenden anhand eines Ausführungsbeispiels erläutert, das in den Figuren der Zeichnung dargestellt ist.

Es zeigen:
- Fig. 1: eine schematische Darstellung eines erfindungsgemäßen Basiskastens;
- Fig. 2: eine schematische Darstellung erfindungsgemäßer einzelner Blumenkastenelemente;
- Fig.3: eine schematische Darstellung einer bevorzugten Ausführungsform eines erfindungsgemäßen Blumenkastenelements.

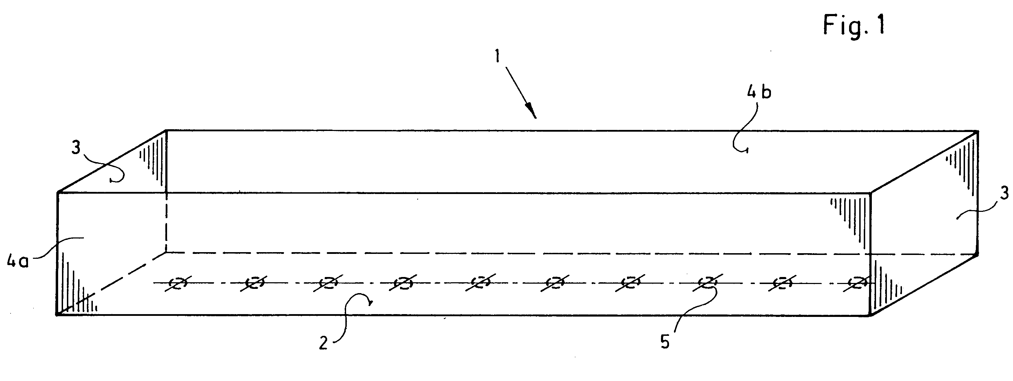

Der in Figur 1 dargestellte Basiskasten 1 weist eine rechteckige Grundfläche 2 auf, von der sich senkrecht zwei Seitenwände 3 und eine Vorderwand 4a und eine Rückwand 4b erstrecken. In der Grundfläche 2 ist eine Mehrzahl im Abstand angeordneter Löcher 5 vorgesehen.

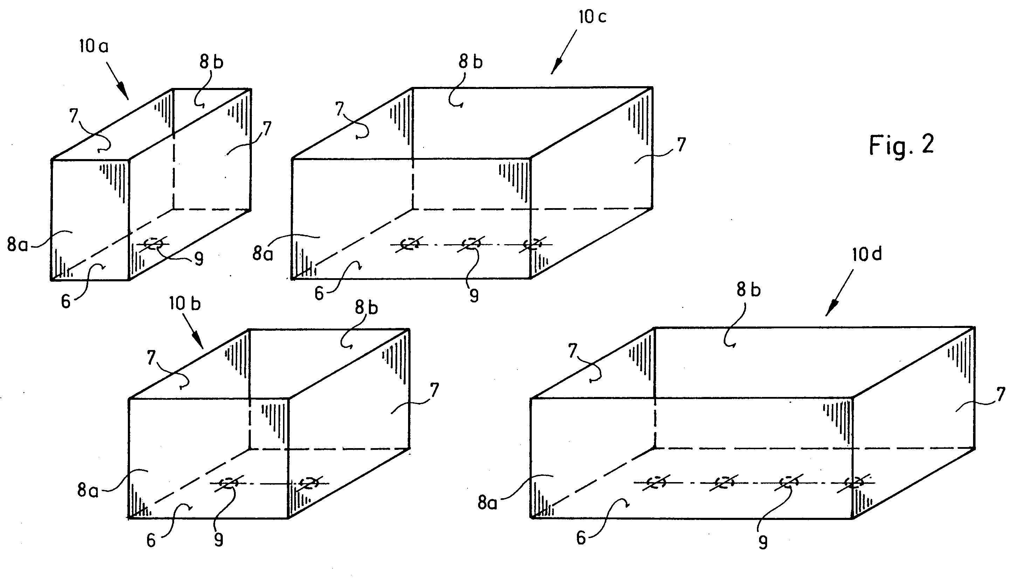

Die in Figur 2 dargestellten Blumenkastenelemente 10a, 10b, 10c und 10d weisen Grundflächen 6 auf, von denen sich Seitenflächen 7 und eine Vorderseite 8a und eine Rückseite 8b senkrecht erstrecken. In den Grundflächen 6 ist mindestens ein Loch 9 vorgesehen, wobei die Zahl der Löcher im Fall der Blumenkastenelemente 10c und 10d auf drei bzw. vier Löcher zunimmt. Die Anzahl der Löcher ist dabei jedoch abhängig von ihrem Durchmesser. So kommen eine größere Anzahl von Löchern mit kleinem Durchmesser in ihrer Wirkung einer geringeren Anzahl von Löchern mit größerem Durchmesser gleich.

Der Basiskasten 1 weist eine Breite von 1 m auf. Die Breite des Blumenkastenelements 10a beträgt 9,75 cm, die Breite des Blumenkastenelements 10b beträgt 19,75 cm, die Breite des Blumenkastenelements 10c beträgt 29,75 und diejenige des Blumenkastenelements 10d beträgt 39,75 cm. Demnach ist es beispielsweise möglich, zwei Blumenkastenelemente 10d mit einem Blumenkastenelement 10b in der Weise zu kombinieren, daß diese drei Blumenkastenelemente seitlich aneinander gereiht in den Basiskasten 1 eingefügt werden. Andere Möglichkeiten bestehen darin, 10 Blumenkastenelemente 10a miteinander zu kombinieren oder zwei Blumenkastenelemente 10b mit sechs Blumenkastenelementen 10a zu kombinieren, oder zwei Blumenkastenelemente 10c mit einem Blumenkastenelement 10b und zwei Blumenkastenelementen 10a zu kombinieren. Die Kombinationsmöglichkeit wird dabei durch den Benutzer je nach dem Platzbedarf der Blumen gewählt, die zusammen in dem Basiskasten 1 angeordnet werden sollen.

Durch die Löcher 9 in den Blumenkastenelementen 10a bis 10d und den Löchern 5 in dem Basiskasten wird sichergestellt, daß überschüssiges Regenwasser oder Gießwasser durch diese Löcher abfließen kann, um zu vermeiden, daß das Wurzelwerk der Pflanzen durch übermäßige Feuchtigkeit schaden nimmt.

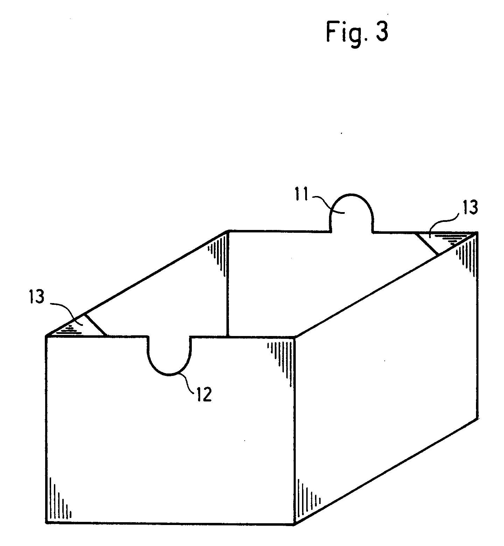

Das in Figur 3 dargestellte Blumenkastenelement weist an einer Querseite eine Lasche 11 aus elastischem Material auf, an der es aus einem in der Figur nicht dargestellten Basiskasten herausgezogen werden kann, und ist an seiner anderen Querseiten mit einer kerbenförmigen Aussparung 12 versehen, die bei Aneinanderreihung mehrerer Blumenkastenelemente in einem Basiskasten einer gegenüberliegenden, nicht mit dieser Aussparung versehenen Querseite eines benachbarten Blumenkastenelementes zu liegen kommt und so ebenfalls ein Erfassen des Blumenkastenelementes von Hand ermöglicht und damit den gleichen Zweck wie die Lasche 11 erfüllt. Desweiteren ist das Blumenkastenelement an zwei von jeweils einer Längs- und einer Querseite gebildeten oberen Eckbereichen mit Zungen 13 versehen, unter die ein Finger eines Benutzers geführt werden kann und die somit ebenfalls ein Ergreifen des Blumenkastenelementes von Hand ermöglichen. Die Einrichtungen 11, 12 und 13 sind als Alternativen gedacht und können daher bei einem Blumenkastenelement alternativ jeweils für sich vorgesehen sein.

## Patentansprüche

1. Blumenkastenvorrichtung für die Aufnahme von Blumen und/oder Pflanzen, wobei die Vorrichtung zusammengesetzt ist aus einem Basiskasten (1) und einer Mehrzahl von Blumenkastenelemente (10a, 10b, 10c, 10d), in die jeweils eine Mehrzahl von Blumen und/oder Pflanzen einbringbar sind, und die in den Basiskasten(1) einsetzbar sind, dadurch **gekennzeichnet**, daß die Blumenkastenelemente (10a, 10b, 10c, 10d) quaderförmig ausgestaltet sind und unterschiedliche Breiten aufweisen die so gewählt sind, daß die Summe ihrer Breiten annähernd gleich der Breite des Basiskastens (1) ist.

2. Blumenkastenvorrichtung nach Anspruch 1, dadurch gekennzeichnet, daß die Blumenkastenelemente (10a, 10b, 10c, 10d) formschlüssig in den Basiskasten (1) einsetzbar sind.

3. Blumenkastenvorrichtung nach einem der vorhergehenden Ansprüche, dadurch gekennzeichnet, daß die Blumenkastenelemente (10a, 10b, 10c, 10d) zur Grundfläche hin sich verjüngend ausgebildet sind, so daß mehrere Blumenkastenelemente (10a, 10b, 10c, 10d) zur Aufbewahrung ineinander gestapelt werden können.

4. Blumenkastenvorrichtung nach einem der vorhergehenden Ansprüche, dadurch gekennzeichnet, daß an mindestens einer Seite eines Blumenkastenelementes (10a, 10b, 10c, 10d) eine Lasche (11) aus einem festen oder elastischen Material vorgesehen ist.

5. Blumenkastenvorrichtung nach einem der vorhergehenden Ansprüche, dadurch gekennzeichnet, daß an mindestens einem von jeweils einer Längs- und einer Querseite gebildeten oberen Eckbereichs eines Blumenkastenelementes (10a, 10b, 10c, 10d) eine Strebe oder Zunge (13) vorgesehen ist.

6. Blumenkastenvorrichtung nach einem der vorhergehenden Ansprüche, dadurch gekennzeichnet, daß an einer der Querseiten eines Blumenkastenelementes (10a, 10b, 10c, 10d) eine Kerbe (12) ausgebildet ist.

## Claims

1. A flower box apparatus for receiving flowers and/or plants, the apparatus being composed of a basic box and a plurality of flower box elements each adapted to receive a plurality of flowers and/or plants and be inserted into a basic box, characterized in that the flower box elements have a cuboid design and have different widths which are selected so that the sum of said widths is approximately equal to the width of the basic box.

2. A flower box apparatus according to claim 1, characterized in that the flower box elements are adapted to be inserted into the basic box in shape-mated fashion.

3. A flower box apparatus according to either of the above claims, characterized in that the flower box elements are formed so as to taper toward the base so that a plurality of flower box elements can be stacked in one another for storage.

4. A flower box apparatus according to any of the above claims, characterized in that a tab made of a rigid or elastic material is provided on at least one side of a flower box element.

5. A flower box apparatus according to any of the above claims, characterized in that a stay or tongue is provided on at least one upper corner area of a flower box element formed by a long side and a transverse side.

6. A flower box apparatus of any of the above claims, characterized in that a notch is formed on one of the transverse sides of a flower box element.

## Revendications

1. Dispositif de bac à fleurs pour recevoir des fleurs et/ou plantes, se composant d'un bac principal et d'une pluralité d'éléments de bac à fleurs, dans lesquels on peut respectivement placer une pluralité de fleurs et/ou plantes, et qui sont adaptés à être insérés dans un bac principal,
**caractérisé en ce que** les éléments de bac à fleurs sont réalisés en forme de parallélépipède et présentent différentes largeurs telles que la somme de leurs largeurs est approximativement égale à la largeur du bac principal.

2. Dispositif de bac à fleurs selon la revendication 1,
caractérisé en ce que les éléments de bac à fleurs peuvent être insérés dans le bac principal à engagement positif.

3. Dispositif de bac à fleurs selon l'une des revendications précédents,
caractérisé en ce que les éléments de bac à fleurs sont conformés de façon effilée vers la surface de base de manière que plusieurs éléments de bac à fleurs puissent être emboîtés aux fins d'emmagasinage.

4. Dispositif de bac à fleurs selon l'une des revendications précédents,
caractérisé en ce que sur au moins un des côtés d'un élément de bac à fleurs est prévu une languette d'un matériau ferme ou élastique.

5. Dispositif de bac à fleurs selon l'une des revendications précédents,
caractérisé en ce que sur au moins une zone de coin supérieure d'un élément de bac à fleurs définie par un grand côté et un petit côté est prévu une traverse ou une langue.

6. Dispositif de bac à fleurs selon l'une des revendications précédents,
caractérisé en ce que sur l'un des petits côtés d'un élément de bac à fleurs est réalisé une encoche.
